# EUROPEAN PATENT SPECIFICATION

(11) **EP 1 702 787 B1**
(45) Date of publication and mention of the grant of the patent: **15.06.2011**
(21) Application number: 04792527.6
(22) Date of filing: 18.10.2004
(51) Int. Cl.: B60K 35/00, B60K 37/02

(54) **DISPLAY FOR VESSEL**
ANZEIGE FÜR SCHIFF
AFFICHAGE POUR RECIPIENT

(30) Priority: 06.01.2004 JP 2004000980
(43) Date of publication of application: 20.09.2006
(73) Proprietor: Yamaha Hatsudoki Kabushiki Kaisha, Shizuoka-ken Shizuoka 438-8501 (JP)
(72) Inventor: KANNO, Isao c/o Yamaha Marine Kabushiki Kaisha, Hamamatsu-shi, Shizuoka 4328058 (JP); MOTOSE, Hitoshi c/o Yamaha Marine Kabushiki Kaisha, Hamamatsu-shi, Shizuoka 4328058 (JP)
(74) Representative: Grünecker, Kinkeldey, Stockmair & Schwanhäusser Anwaltssozietät
(86) International application number: PCT/JP2004/015358
(87) International publication number: WO 2005/065979

(56) References cited:
- EP-A- 0 895 892
- JP-A- 2 042 314
- JP-A- 57 041 224
- JP-A- 60 092 130
- JP-A- 2001 004 953
- JP-U- 4 035 927
- JP-U- 54 098 188
- US-A- 4 740 780
- US-A- 5 371 510
- US-A1- 2002 085 035

## Description

### Field of the Invention

This invention relates to a display device for a watercraft to indicate various status data values regarding the conditions of an outboard motor such as engine speed, trim angle, cooling water temperature, battery voltage, and oil level.

### [Background art]

Conventionally, a display device for a watercraft to indicate various status data values of outboard motor conditions is known, in which special display regions are provided for indicating watercraft speed or engine speed, as well as trim angle of the outboard motor, with oil level meters provided independently to indicate the oil level by the lighting position among the three lamps (See Patent Document 1).

It does not clearly specify how to indicate other status data values regarding the outboard motor conditions including, for instance, cooling water temperature, cooling water pressure, battery voltage, and oil pressure. However, it is assumed that a meter to indicate these status data values may possibly be configured with the lamps similar to those for the oil level, in view of the foregoing conventional technology.
[Patent Document 1] JP-B-Hei 6-027978

### [Disclosure of the invention]

### [Problem to be Solved by the Invention]

However, these conventional devices arise a problem that dedicated meters must be provided for every type of status data to be displayed, resulting that the larger installation space is required to accommodate all the display device for a watercraft, as the number of status data to be displayed is increased. In addition, as these meters are of built-in type, all of them would come into an operator' s view at any time, requiring substantial work load and mental strain for visually recognizing the information on the meters.

US-A4 740 780 discloses an LED display array suitable for a power boat to indicate a vehicle speed or a rotational speed of the engine crankshaft of a vehicle engine. A matrix of the LEDs of the array is used as a symbol source. In a sub-array, pictorial or Icon symbology or alphabetic presentations are displayed.

EP-A-0 895 892 discloses a display device comprising a display region to indicate status data values regarding the conditions of an engine. The display device includes a dot matrix display to indicate information such as letters and Figures. A segmentation of the display region can be carried out dependent on requirements.

The closest prior art, DE-A-33 385, discloses a display device comprising a bar graph display for fuel level, water temperature, battery voltage and oil pressure as well as a bar graph display for the engine revolution speed. Further a mileage counter and a tachometer display are provided. The displays including the dimensions and symbols are made from liquid crystals.

It is the object of the present invention to provide a display device for a watercraft to indicate various status data related to the conditions of an outboard motor, while allowing the reduction of the device size, and the improvement of the visual recognition ability.

### [Means for Solving the Problem]

The foregoing objective is achieved according to the invention by the display device according to Claim 1.

The invention described in Claim 2 is characterized in that the display form of various status data values indicated in each rectangular region of the dot matrix display is capable of setting up variably.

The invention described in Claim 3 is characterized in that the display form is a scale display depicted by the lighting pattern of the dots.

The invention described in Claim 4 is characterized in that the display form is a display using numerals or characters depicted by the lighting pattern of the dots.

The invention described in Claim 5 is characterized in that the information mark display section is provided at the side of the dot matrix display, in which information marks to identify the category of various status data are displayed.

The invention described in Claim 6 is characterized in that the display position of the information marks indicated in the information mark display section, and the display position of the status data values corresponding to the information mark and indicated in the dot matrix display section are aligned with each other side by side.

The invention described in Claim 7 is characterized in that the information mark display section is divided into grids arranged in the form of matrix, and the predetermined information mark can be lighted on or off freely in each grid, allowing the variable set up for lighting on or off of the information mark for each grid.

The invention described in Claim 8 is characterized in that the information mark capable of lighting in each grid is a graphic for identifying the type of status data displayed in each rectangular region of the dot matrix display.

### Effect of the invention

According to the invention of Claim 1, since it is a display device for a watercraft to indicate various status data values regarding the conditions of an outboard motor such as cooling water temperature, battery voltage, and oil level, in which, a dot matrix display is provided as a part of display region, dots capable of being turned on and off freely are arranged in the form of matrix, and the status data values are indicated by means of the lighting pattern of the dots, the display device for a watercraft can be provided that can display the desired data selected by the decision of a watercraft operator or the software responsible for collection and management of information regarding the boat's operation.

Since the dot matrix display is divided into plural rectangular regions laid out vertically in sections and each of the rectangular regions displays different types of the status data values, the size of the display device for a watercraft can be reduced.

Since the number of sections formed by dividing the dot matrix display with the rectangular region is capable of setting up variably, the size of the display device for a watercraft can be reduced further.

Since an information mark display section is provided to be aligned with the dot matrix display, information mark display section displays information marks to identify the category of the various status data, and thus the meaning and contents of the status data value can be recognized clearly at a glance, a display device for a watercraft can be provided with improved recognizability for status data values on the display device for a watercraft.

According to the invention of Claim 2, since the display form of the various status data values indicated in each of the rectangular regions is capable of setting up variably, the size of the display device for a watercraft can be reduced further.

According to the invention of Claim 3, since the display form is a scale display depicted by the lighting pattern of the dots, a display device for a watercraft can be provided with improved visual recognition ability.

According to the invention of Claim 4, since the display form is a display using numerals or characters depicted by the lighting pattern of the dots, a display device for a watercraft can be provided with further improved visual recognition ability.

According to the invention of Claim 6, since display positions of information marks indicated in the information mark display section, and display positions of the status data values corresponding to the information marks and indicated in the dot matrix display section are aligned with each other side by side, a display device for a watercraft can be provided with further improved recognizability for status data values on the display device for a watercraft.

According to the invention of Claim 7, since the information mark display section is divided into grids arranged in the form of matrix, and predetermined information mark is lighted freely on or off in each of the grids, allowing variable set up for lighting on or off of the information marks for each of the grids, a display device for a watercraft can be provide with only the necessary information marks being lighted for further improved recognizability of status data values.

According to the invention of Claim 8, since the information mark capable of lighting in each of the grids is a graphic for identifying types of the status data displayed in each of the rectangular regions of the dot matrix display, a display device for a watercraft can be provided to allow instantaneous recognition of the status data category.

### Brief Description of Drawings

Fig. 1 is a perspective view of a hull 11 according to the embodiment of the present invention.
Fig. 2 is an elevation view of a display device 12 according to the embodiment of the present invention.
Fig. 3 is an example of a display screen configuration of the display device 12 according to the embodiment of the present invention, showing the status data for an outboard motor 13.
Fig. 4 is a logic bloc diagram for explaining the behavior of the display device 12 according to the embodiment of the present invention.
Fig. 5 is an illustration for explaining one of the transition flows of the display screen on the display device 12 according to the embodiment of the present invention.
Fig. 6 is an illustration for explaining other transition flow of the display screen on the display device 12 according to the embodiment of the present invention.
Fig. 7 is an illustration for explaining the transition flow after the activation of the display screen on the display device 12 according to the embodiment of the present invention.
Fig. 8 is an illustration for explaining the transition flow of the display screen on the display device 12 according to the embodiment of the present invention in the maintenance message display mode.

### Best Mode for Embodying the Invention

Now, an embodiment of this invention will be described below with reference to the drawings 1 through 8.

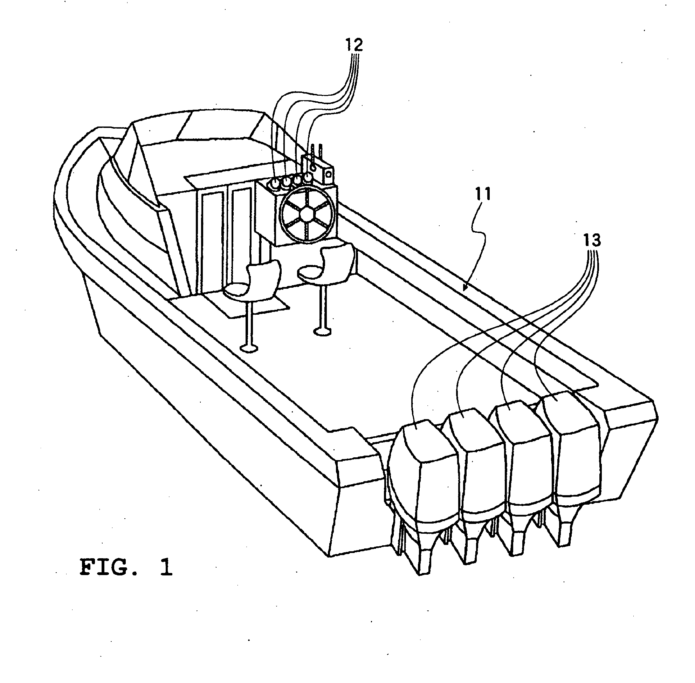

Configuration of the embodiment of this invention is as follows. Reference numeral 11 in Fig. 1 denotes a hull 11. A total of four (4) display devices 12 are provided in front of the operator's seat on the hull 11, and a total of four (4) outboard motors 13 are provided at the rear of the hull 11. These multiple outboard motors 13 and display devices 12 are connected by means of LAN (Local Area Network).

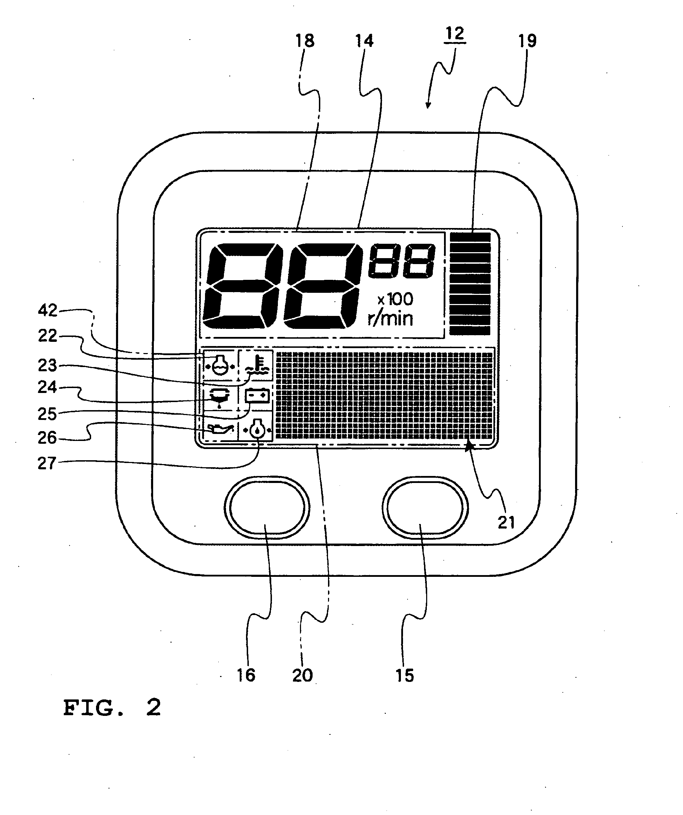

As shown in Fig. 2, each of these display device 12 is provided with a display section 14 for showing various status data values related to the condition of the outboard motors 13, and also a mode selecting switch 15 and a set switch 16 are provided below the display section 14. As described later, the device is designed so that users can select the contents of the display section 14 as they want by properly pressing down the mode selecting switch 15 and the set switch 16.

As shown in Fig. 2, the display section 14 includes in general: an engine speed display section 18 for displaying revolution speed of the engine on the outboard motor 13, a trim position display section 19 for displaying trimming position of the outboard motor 13, and multi-display section 20 for displaying various kinds of status data values related to the condition of the outboard motors 13 such as: cooling water temperature (hereinafter referred to as "water temperature"), cooling water pressure (hereinafter referred to as "water pressure"), battery voltage, engine oil level (hereinafter referred to as "oil level"), engine oil pressure (hereinafter referred to as "oil pressure") total accumulated engine operating hours, and accumulated trip hours.

In the engine speed display section 18, two-digit integer number of the engine speed measured in units of 100r/min is indicated. In addition, in the trim position display section 19, the trim position of the outboard motor 13 is indicated with vertically extending meter having segments lighted up one by one from the bottom to indicate the present trim position.

The multi-display section 20 has a dot matrix display 21 having dots arranged in matrix which can be lighted on or off freely, and an information mark display section 42 provided at the side of dot matrix display 21 for showing information marks to indicate the meaning and contents of the status data value displayed in the dot matrix display 21.

The dot matrix display 21 is divided into the plural rectangular regions 41 laid out vertically in sections, with each rectangular region 41 displaying different status data value.

Number of sections in the divided regions included in the dot matrix display 21 may be set up variably.

Also, the display form of the status data values indicated in each rectangular region 41 of the dot matrix display 21 may be set up variably.

Here, the display form of the status data values indicated in each rectangular region 41 is either a graduations (scale display) depicted by the lighting pattern of the dot-matrix, or a line of numerals or characters also depicted by the lighting pattern of the dot-matrix.

In addition, the display position of the information marks indicated in the information mark display section 42, and the display position of the status data values corresponding to the information mark and indicated in the dot matrix display 21 are arranged to be aligned with each other side by side.

Information mark display section 42 is divided into grids arranged in the form of matrix. Predetermined information marks can be lighted on or off freely in each grid. Turning on or off of the light for the information mark can be set up variably for each grid.

Here, the information mark that can be lighted in each grid is a graphic (mark) for identifying the type of status data displayed in each rectangular region 41 of the dot matrix display 21.

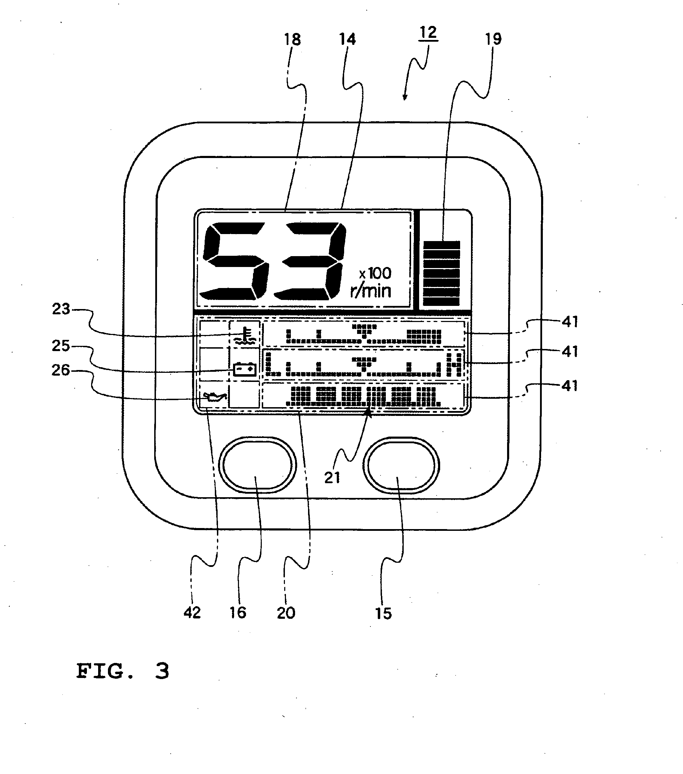

For instance, Fig. 3 shows an example of display condition on multi-display section 20 while the hull is in the normal operating condition. The dot matrix display 21 is divided into three (3) sections of rectangular regions 41. Water temperature, battery voltage, and oil level are displayed in the top section, the intermediate section, and the bottom section respectively, by means of the scale (graduations) stimulatingly depicted with the dot-matrix lighting pattern.

Information mark display section 42 is divided into three (3) rows, two (2) columns grids arranged in the form of matrix, among which a water pressure mark 22 is located at the first column in the first row, a water temperature mark 23 is located at the second column in the first row, a water accumulation mark 24 is located at the first column in the second row, a battery mark 25 is located in the second column in the second row, an oil level mark 26 is located in the first column in the third row, and a oil pressure mark 27 is located in the second column in the third row, each of which being ready to be turned on.

In Fig. 3, only the water temperature mark 23, battery mark 25, and the oil level mark 26 are turned on, and these three (3) information marks being turned on allow identification of the category of the status data value displayed in the three (3) rectangular regions 41 in the dot matrix display 21 next to the information marks.

The display section 14 is configured with liquid crystal display. Since high visibility is required anytime day or night from the display, it should be made by transmissive liquid crystal display having a back light of intensive brightness, or by reflective liquid crystal display with a front light. Alternatively, the display section 14 is configured with dotted, light-emitting diodes of intensive brightness arranged in the form of matrix.

Besides the scale, a warning symbol depicted by the lighting pattern of the dot-matrix may be displayed in each rectangular region 41 of the dot matrix display 21. For instance in the rectangular region 41 at the intermediate section in Fig. 3, symbols of L (Low) and H (high) indicating that the battery voltage is in the risk level are displayed by means of dot-matrix at both ends of the scale.

As shown in Fig. 3, in case that plural scales are displayed, it would be desirable that they have generally the same horizontal expansion in order to improve the visual recognition ability.

Arrangements are made so that the plural status data values regarding the conditions inside of the outboard motor 13, as the subject of such display, are transmitted to the display device 12 via LAN. In the display device 12, arrangements are made to select the status data values necessary for the display among the data values from the outboard motor 13, and make them displayed at the predetermined position in the display section 14.

Next, the action will be described.

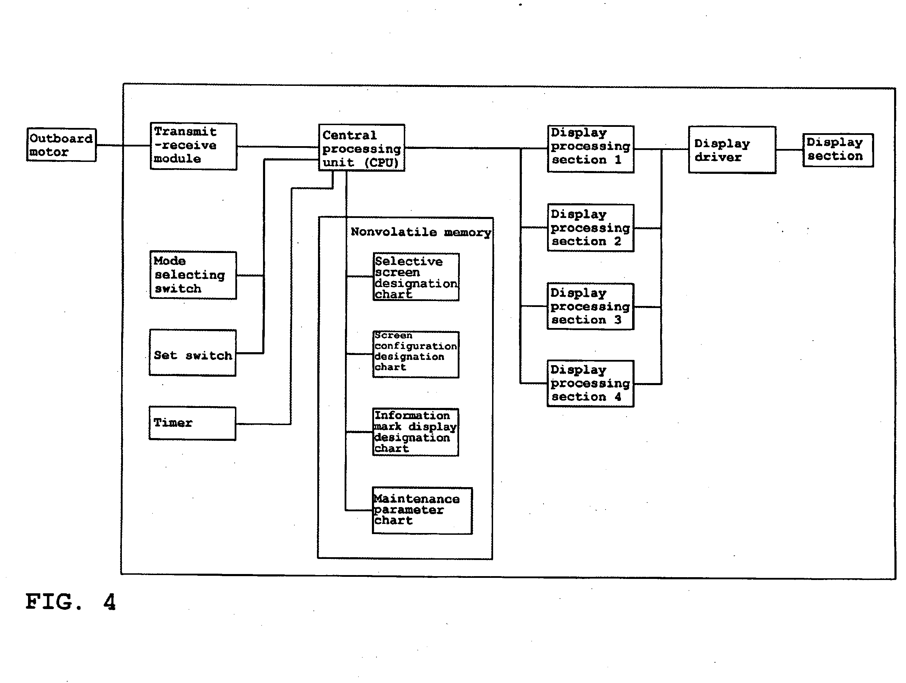

While the outboard motor 13 is in its operating condition, revolution speed data, trim position data, and other status data values regarding the conditions of the outboard motor 13 are transmitted from the outboard motor 13 side to the display device 12 via LAN, as shown in Fig. 4. A CPU 17 of the display device 12 receives these varieties of data via a transmit-receive module 29.

Once various status data values for the outboard motor 13 are received by the CPU 17, it transmits the revolution speed data value among them to the revolution speed display processing section.

It also transmits the trim position data value to the trim position display processing section.

Next, the CPU17 performs the display process for other status data values than those for revolution speed and trim position. In the course of such data processing, the CPU 17 makes reference to screen configuration designation chart, information mark display designation chart, and selective screen designation chart, which have been stored in nonvolatile memory contained in the display device 12.

The screen configuration designation chart stores more than two patterns of screen configuration for the dot matrix display 21. Specifically, the screen configuration designation chart is a data base in the form of matrix, in which each column corresponds to the category of status data values such as water pressure, water temperature, battery voltage, oil level, oil pressure, accumulated engine operating hours, and accumulated trip hours, while each row corresponds to the screen configuration numbers for the dot matrix display 21. Further, two (2) kinds of information are stored in each field determined by specifying the row and the column of this database.

The first one of the two (2) kinds of information is to identify if the relevant status data value should be displayed or not, and to specify the form of display regarding the relevant screen configuration number. The value of the first information denotes that the relevant status data value will not be displayed if it is " " (blank) ; the relevant status data value will be displayed in the form of scale if it is "S"; the relevant status data value will be displayed in characters by using a series of letters or numerals if it is "C"; or alternatively, the relevant status data value will be displayed in both scale and characters if it is "SC". The second one of the two (2) kinds of information is to specify in which section of the dot matrix display 21 the relevant status data value should be displayed.

In addition, total number of the status data values displayed for each screen configuration number is stored in the second column of the screen configuration designation chart.

Table 1 shows an example of the screen configuration designation chart.

**[Table 1]**

| Screen Configuration Designation Chart | | | | | | | | |
|---|---|---|---|---|---|---|---|---|
| Screen Configuration No. | Display Data | Cooling Water Temp. | Cooling Water Pressure | Battery Voltage | Oil Level | Oil Pressure | Engine Operating hrs. | Trip hrs. |
| 0 | 0 | | | | | | | |
| 1 | 3 | S/1^{st} row | | S/2^{nd} row | S/3^{rd} row | | | |
| 2 | 3 | | S/1^{st} row | S/2^{nd} row | S/3^{rd} row | | | |
| 3 | 2 | S/1^{st} row | | S/2^{nd} row | | | | |
| 4 | 2 | S/1^{st} row | | | S/2^{nd} row | | | |
| 5 | 2 | S/1^{st} row | | | | | C/2^{nd} row | |
| 6 | 2 | | S/1^{st} row | C/2^{nd} row | | | | |
| 7 | 2 | | S/1^{st} row | | S/2^{nd} row | | | |
| 8 | 2 | | S/1^{st} row | | | | C/2^{nd} row | |
| 9 | 2 | | | S/1^{st} row | S/2^{nd} row | | | |
| 10 | 2 | | | S/1^{st} row | | | C/2^{nd} row | |
| 11 | 2 | | | | S/1^{st} row | | C/2^{nd} row | |
| 12 | 1 | S/1^{st} row | | | | | | |
| 13 | 1 | | S/1^{st} row | | | | | |
| 14 | 2 | | | SC/1^{st} row | | | | |
| 15 | 1 | | | | S/1^{st} row | | | |
| 16 | 2 | | | | S/1^{st} row | S/1^{st} row | | |
| 17 | 2 | | | | | | C/1^{st} row | C/2^{nd} row |

The information mark display designation chart stores the information regarding the type of information marks to be displayed in the information mark display section, and its display position for each screen configuration. That is, the information mark display designation chart is a data base in the form of matrix, in which each column corresponds to the types of information mark such as the cooling water pressure mark 22, the cooling water temperature mark 23, the water accumulation mark 24, the battery mark 25, the oil level mark 26, the oil pressure mark 27, and each row corresponds to the screen configuration numbers. Further, each field determined by specifying the row and the column of this database stores the information for designating in which column and raw in the information mark display section the relevant information mark should be displayed in regard to the relevant screen configuration number. If this field if blank, the relevant information mark is not displayed for the relevant screen configuration number. The water accumulation mark 24 among the above-mentioned six (6) information marks is not displayed in the normal condition. The mark blinks as a warning only when water accumulation is detected in the fuel filter. Table 2 shows an example of the information mark display designation chart.

**[Table 2]**

| Information Mark Display Designation Chart | | | | | |
|---|---|---|---|---|---|
| Screen Configuration | Water Temp. Mark | Water Pressure Mark | Battery Mark | Oil Level Mark | Oil Pressure Mark |
| 0 | | | | | |
| 1 | ON | | ON | ON | |
| 2 | | ON | ON | ON | |
| 3 | ON | | ON | | |
| 4 | ON | | | ON | |
| 5 | ON | | | | |
| 6 | | ON | ON | | |
| 7 | | ON | | ON | |
| 8 | | ON | | | |
| 9 | | | ON | ON | |
| 10 | | | ON | | |
| 11 | | | | ON | |
| 12 | ON | | | | |
| 13 | | ON | | | |
| 14 | | | ON | | |
| 15 | | | | ON | |
| 16 | | | | | ON |
| 17 | | | | | |

The selective screen designation chart stores the screen configuration numbers to which the screen may be switched by means of the mode selecting switch 15. Table 3 shows an example of the information mark display designation chart.

**[Table 3]**

| Selective Screen Designation Chart | |
|---|---|
| Selective Screen 1 | Screen Configuration No. 1 |
| Selective Screen 2 | Screen Configuration No. 2 |
| Selective Screen 3 | Screen Configuration No. 3 |
| Selective Screen 4 | Screen Configuration No. 4 |

Initially, the CPU 17 refers to the first row of the selective screen designation chart to acquire the screen configuration number allocated to the selective screen 1. Then, it refers to the row in the screen configuration designation chart that corresponds to the acquired screen configuration number. Referring to the information values in each column of the applicable row, and if the status data value corresponding to that column needs to be displayed, the CPU 17 transmits the relevant information value to a dot-matrix display processing section 31. At this times, the CPU 17 simultaneously transmits the total number of the status data values displayed in the relevant screen configuration number. This is because the height of the rectangular region 41 of the dot-matrix section 21 in which the relevant data value is displayed, is determined based on the total number of status data values to be displayed.

Also, the CPU 17 refers to the row in the information mark display designation chart that corresponds to the screen configuration number of the selective screen 1. Referring to the information value in each column of the row, and if the information mark corresponding to that column needs to be displayed, the CPU 17 transmits the relevant information value to an information mark display processing section 31 that is responsible for carrying out the information mark display process.

Display processing sections 31 through 34 receives data from the CPU 17, performs predetermined processing to create data for display, and transmits them to display driver. Then, the display driver outputs the control signal for display to the display section 14.

As the contents of the screen configuration designation chart, the information mark display designation chart, and the selective screen designation chart are specified as shown in Tables 1 through 3, the display condition on the display section 14, as shown in Fig. 3, is achieved by means of the action described above.

As have been described so far, since the screen configuration on the display section 14 of the display device 12 can be set up freely by the discretional setting of the contents in the screen configuration designation chart, the information mark display designation chart, and the selective screen designation chart, the display device 12 for a watercraft can be provided to display various status data related to the conditions of the outboard motor 13, while achieving the device of reduced size and improved visual recognition ability.

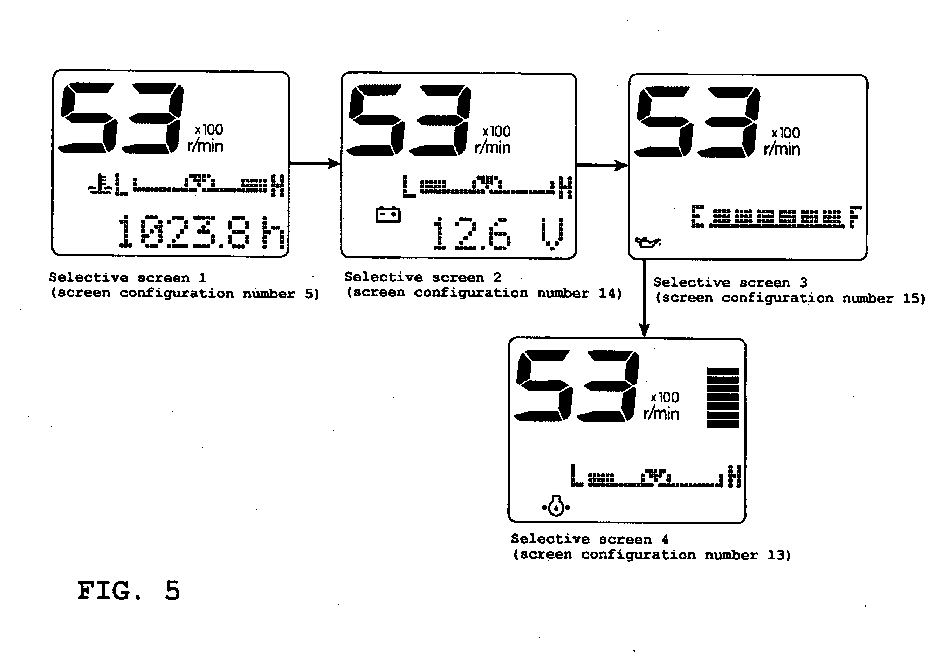

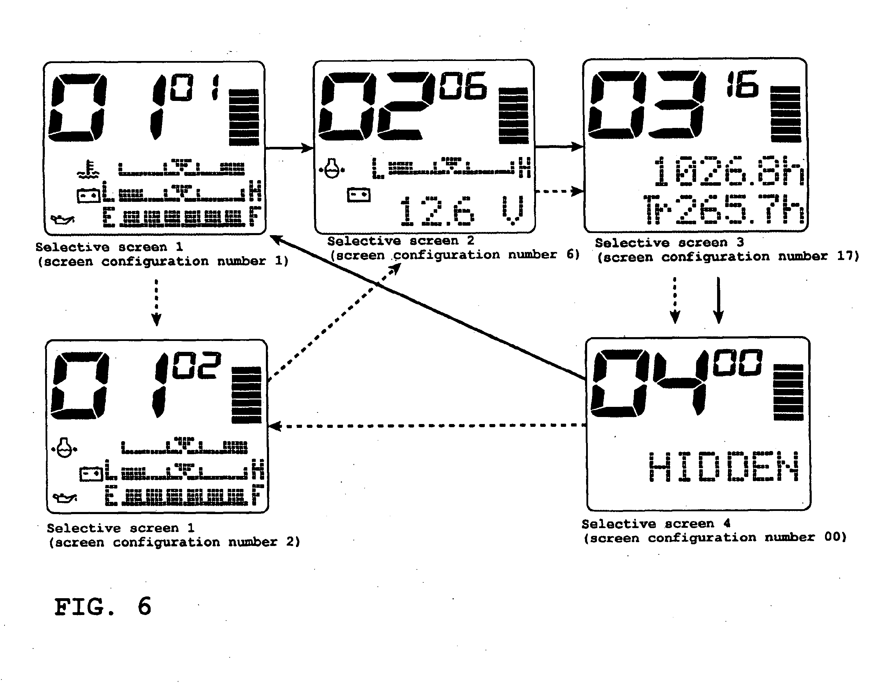

Fig. 5 is an illustration for explaining one of the transition flows of the display screen on the display device 12 according to the embodiment of this invention. Fig. 6 is an illustration for explaining other transition flow of the display screen on the display device 12 according to the embodiment of this invention.

As described above, the screen configuration designation chart in Table 1, and the information mark display designation chart in Table 2 stores plural patterns of screen configuration on the dot matrix display 21, and the information mark display section 42 of the display section 14. This allows users selecting their desired screen configuration by providing appropriate user interface. An example of such user interface, which is composed using the mode selecting switch 15 and the set switch 16 will be described below

Tables 4, 5, and 6 show an example of contents for the selective screen designation chart in the nonvolatile memory of the display device 12.

**[Table 4]**

| Selective Screen Designation Chart | |
|---|---|
| Selective Screen 1 | Screen Configuration No. 5 |
| Selective Screen 2 | Screen Configuration No. 14 |
| Selective Screen 3 | Screen Configuration No. 15 |
| Selective Screen 4 | Screen Configuration No. 16 |

**[Table 5]**

| Selective Screen Designation Chart | |
|---|---|
| Selective Screen 1 | Screen Configuration No. 1 |
| Selective Screen 2 | Screen Configuration No. 6 |
| Selective Screen 3 | Screen Configuration No. 17 |
| Selective Screen 4 | Screen Configuration No. 0 |

**[Table 6]**

| Selective Screen Designation Chart | |
|---|---|
| Selective Screen 1 | Screen Configuration No. 2 |
| Selective Screen 2 | Screen Configuration No. 6 |
| Selective Screen 3 | Screen Configuration No. 17 |
| Selective Screen 4 | Screen Configuration No. 0 |

In the normal condition, that is, when CPU 17 is carrying out no interruption processing that arises as users push down the mode selecting switch 15 or set switch 16, the screen configuration number specified as selective screen 1 is referenced to by the CPU 17, as described above. Then, CPU 17 refers to the row corresponding to the screen configuration number in the screen configuration designation chart and in the information mark display designation chart, and controls the screen display on the display section 14 in accordance with the contents of the referred row.

Now, the behavior when interruption processing is performed as users push down the mode selecting switch 15 is described. Every time the mode selecting switch 15 is pressed down by users, CPU 17 cyclically switches the screen configuration on the multi-display section 20 as selective screen 1 → selective screen 2 → selective screen 3 → selective screen 4 → selective screen 1. That is, the CPU 17 changes cyclically the position of row to which it refers on the selective screen designation chart as; second row → third row → fourth row → first row, and so on. As the position of the referenced row is changed, the CPU 17 displays the current status data values on the display section 14 in accordance with the screen configuration number of the referring row. For instance, when the contents of selective screen designation chart in Table 4 is applied, the screen display based on the screen configuration number 5 is presented in normal condition. However, every time the user presses down the mode selecting switch 15, the screen configuration on the display section 14 changes cyclically as screen configuration number 14 → screen configuration number 15 → screen configuration number 13 → screen configuration number 5, and so on. A series of screen configurations switching as described above are shown in Fig. 5.

When the mode selecting switch 15 or set switch 16 is not pressed down for predetermined period of time, e.g. for 10 seconds, the CPU 17 restores the processing under normal condition. In other words, it presents the screen display based on the screen configuration number specified as the selective screen 1.

Next, the behavior when the set switch 16 is pressed down by users is described. Assume one of the selective screens is displayed as a result of pressing down of the mode selecting switch 15 by users. Here, each time the set switch 16 is pressed down by users, CPU 17 switches the screen configuration cyclically as screen configuration number 1 → screen configuration number 2 → screen configuration number 3 → ... screen configuration number 16 → screen configuration number 1, indicating the current status data values on such selective screen.

If the mode selecting switch 15 is pressed down by users at some point in the process, the screen configuration number presented at that time shall be applied to the selective screen. In other words, the contents of the row corresponding to the switched selective screen number in the selective screen designation chart are overwritten on the screen of the relevant screen configuration number.

For instance, when the contents of selective screen designation chart in Table 5 is applied, the screen display is switched as shown in Fig. 6 every time the mode selecting switch 15 is pressed down by users. Now, if the set switch 16 is pressed down while the selective screen 1 is displayed, the screen configuration number is altered cyclically as; screen configuration number 1 → screen configuration number 2 → ... every time the set switch 16 is pressed down, and the current status data values are displayed on the selective screen 1 with altering screen configuration number. Then, if the mode selecting switch 15 is pressed down by users while the screen configuration number 2, for instance, is being applied to the screen display, the screen configuration allocated to this selective screen 1 is changed to the screen configuration number 2 in the subsequent process. That is, the contents of the selective screen designation chart is rewritten as shown in Table 6, and the screen will be switched in accordance with the contents of Table 6 in the subsequent process. Accordingly, the screen will be switched in sequence as shown in Fig. 6, once the screen selection is carried out as the mode selecting switch 15 is pressed down by users.

In addition, the data value display for the engine revolution speed and the trim position is suspended on each screen of the display section 14 shown in Fig. 6 in order to show a boat operator clearly that the screen setting mode is currently active. Instead, the selective screen number of the present display is presented in two-digits by larger numerals, and the screen configuration number of the present display is presented in two-digits by smaller numerals, utilizing the display function of the engine revolution speed display section 18.

One example of user interface configured by using the mode selecting switch 15 and the set switch 16 for switching the selective screen of multi-display section 20 and for setting the screen configuration of each selective screen has been described in the foregoing sections. However, the configuration of user interface is not limited by any means to what has been described above.

As have been explained in the foregoing sections, users can switch the display of the multi-display section 20 on the display section 14 at any time and over the plural number of screens. In addition, users can set the screen configuration of each selective screen in any desirable manner. Thus, there is no need for squeezing a lot of status data values display into one screen, and users can allocate the data on each screen so as to provide the highest visibility to each user. With this arrangement, the display device 12 for a watercraft with substantially reduced workload and mental strain required for the visual recognition of the display can be provided.

Now, screen conditions of the display section 14 upon activation of the display device 12 is described in the following sections.

First, it will be explained referring to the logic block diagram shown in Fig. 4.

When the power to the display device 12 is turned on, the CPU 17 indicates an activation display on the display section 14 for 1.0 second.

From 1.0 to 3.0 seconds after the activation, the CPU 17 indicates a test pattern on the display section 14.

From 3.0 to 4.0 seconds after the activation, the CPU 17 indicates the revolution speed in the revolution speed display section 18, and the trim position in the trim position display section 19, along with the accumulated operation hours and trip hours on the multi-display section 20.

From 4.0 seconds onward after the activation, the CPU 17 refers to a maintenance parameter chart that is included in the nonvolatile memory storing the data related to the maintenance of the outboard motor 13. Then, If any requirement for maintenance is detected at that point in time, the CPU 17 indicates the message to this effect on the multi-display section 20. If there are plural requirements for maintenance, the maintenance message for each requirement is indicated alternately by switching it at every 3.0 seconds Display of the maintenance message continues until the mode selecting switch 15 is pressed down by users. Timing for requiring the oil change, the timing for requiring impeller inspection, and other information are registered in the maintenance parameter chart.

If no maintenance requirements are detected, or if the maintenance message display is canceled as the mode selecting switch 15 is pressed down by users while the maintenance message is being indicated from 4.0 seconds onward after the activation, then, transition to the normal mode takes place. That is, the CPU 17 starts the display processing of the status data values to make them displayed on the display section 14, as described above.

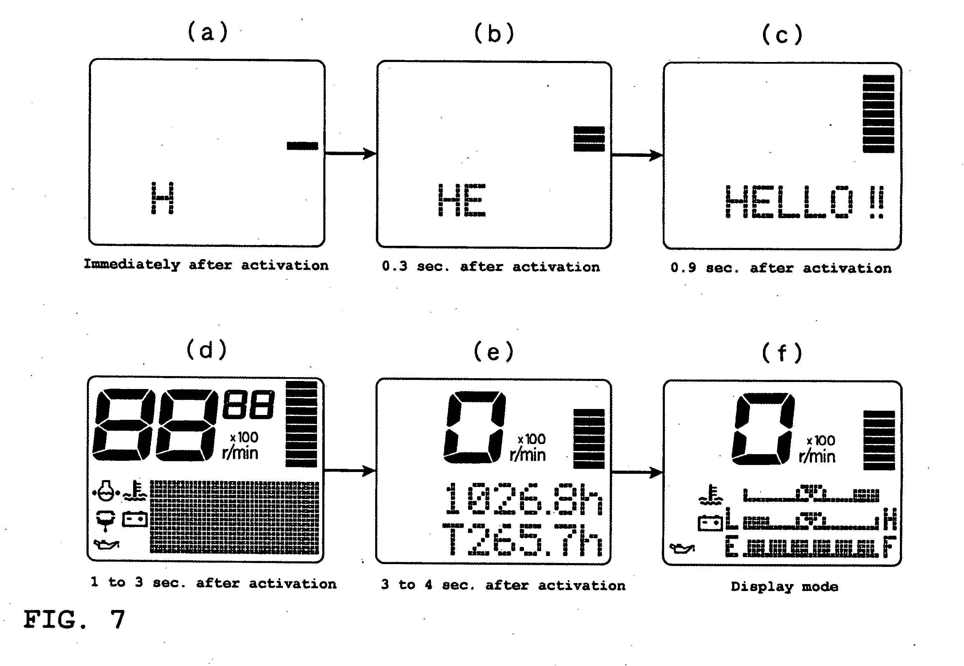

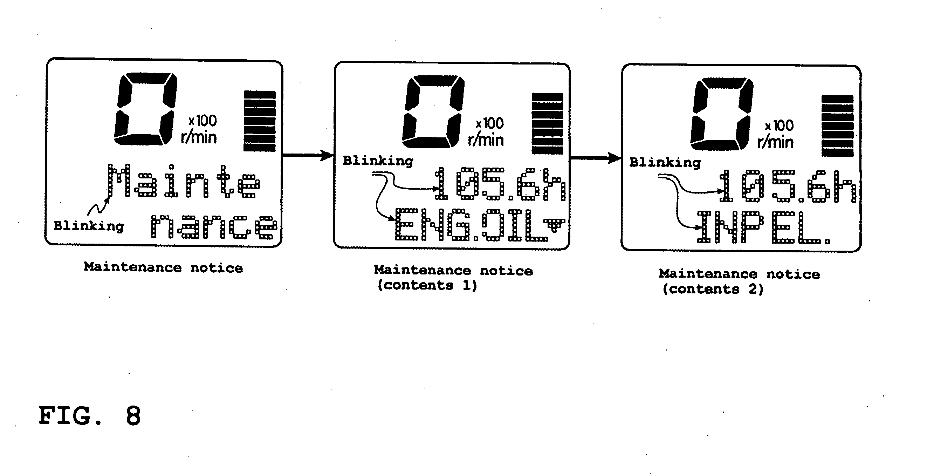

Fig. 7 shows one example of screen display transition at the time of device activation. For 1.0 second after activation, the message "HELLO!!" is displayed on the multi-display section 20 as a start-up screen ((a) through (c)). At the same time, the segments in the trim position display section 19 are turned on adding one by one from the bottom at every 0.1. From 1.0 to 3.0 seconds after activation, the revolution speed display section 18, the trim position display section 19, and the multi-display section 20 are all turned on as the test pattern for liquid crystal display operation ((d)). From 3.0 to 4.0 seconds, the revolution speed, the trim position, the accumulated operating hours, and the trip hours are indicated on the display section 14 ((e)). In the case shown in Fig. 7, it moves into the normal mode from 4.0 seconds onward after the activation, since no maintenance requirements have been detected after the activation ((f)). Then, the screen as shown in Fig. 3 is indicated. On the contrary, if any maintenance requirements have been detected after the activation, the maintenance messages as shown in Fig. 8 are displayed prior to the transition to the normal mode.

As have been described, the display device 12 for a watercraft is provided according to Fig. 7 and Fig 8, which is considered to allow notification to the boat operator of the presence or non-presence of abnormality regarding the display device for a watercraft, as well as the requirement or non-requirement of the maintenance on the outboard motor 13, before the watercraft gets to the normal operating condition, thus enabling the reduction of watercraft operator's work load or mental strain in relation to the maintenance work for the watercraft.

### Description of Reference Numerals

- 11:: hull
- 12:: display device
- 13:: outboard motor
- 14:: display section
- 15:: mode selecting switch
- 16:: set switch
- 17:: CPU
- 18:: revolution speed display section
- 19:: trim position display section
- 20:: multi-display section
- 21:: dot matrix display
- 41:: rectangular region
- 42:: information mark display section

## Claims

1. Display device suitable for a watercraft having an outboard motor (13) to indicate status data values regarding the conditions of the outboard motor (13),
said display device comprises a dot-matrix display processing section (31) and a display section (14) including an engine speed display section (18) for displaying revolution speed of the engine on the outboard motor (13) and a multi-display section (20) for displaying various kinds of status data values related to the condition of the outboard motor (13),
said multi-display section (20) has a dot matrix display (21), in which dots capable of being turned on and off freely are arranged in the form of a matrix, and the status data values are indicated by means of a lighting pattern of the dots, and
said multi-display-section (20) has an information mark display section (42) for showing information marks to indicate the meaning and contents of the status data value displayed in the dot matrix display (21), wherein
the display position of the information marks indicated in the information mark display section (42), and the display position of the status data values corresponding to the information mark and indicated in the dot matrix display (21) are arranged to be aligned with each other,
the dot matrix display(21) is divided into plural rectangular regions laid out vertically in sections, and each of the rectangular regions displays different types of the status data values, and
wherein the dot-matrix display processing section (31) is adapted to set up variably the number of the rectangular sections formed by dividing the dot matrix display (21) with the rectangular region and to determine the height of the rectangular section (40), in which the relevant data value is displayed, based on the total mumber status data values to be displayed.

2. Display device for a watercraft according to claim 1, wherein a display form of the various status data values indicated in each of the rectangular regions is capable of setting up variably.

3. Display device for a watercraft according to claim 1 or 2, wherein the display form is at least partially a scale display depicted by the lighting pattern of the dots.

4. Display device for a watercraft according to one of the claims 1 to 3, wherein the display form is at least partially a display using numerals or characters depicted by the lighting pattern of the dots.

5. Display device for a watercraft according to one of the claims 1 to 4, wherein the information mark display section (42) is provided at the side of the dot matrix display.

6. Display device for a watercraft according to one of the claims 1 to 5, wherein display positions of the information marks indicated in the information mark display section (42), and display positions of the status data values corresponding to the information marks and indicated in the dot matrix display section (21) are aligned with each other side by side.

7. Display device for a watercraft according to one of the claims 1 to 6, wherein the information mark display section (42) is divided into grids arranged in the form of matrix, and a predetermined information mark is lighted freely on or off in each of the grids, allowing variable set up for lighting on or off of the information marks for each of the grids.

8. Display device for a watercraft according to claim 7, wherein the information mark capable of lighting in each of the grids is a graphic for identifying types of the status data displayed in each of the rectangular regions of the dot matrix display.

9. Display device for a watercraft according to one of the claims 1 to 8, wherein the various status data values regarding the conditions of an outboard motor (13) include a cooling water temperature, a battery voltage, and an oil level.

## Patentansprüche

1. Anzeigevorrichtung, die für ein Wasserfahrzeug mit einem Außenbordmotor (13) geeignet ist, um Status-Datenwerte bezüglich der Zustände des Außenbordmotors (13) anzuzeigen,
wobei die Anzeigevorrichtung einen Punktmatrixanzeige-Verarbeitungsabschnitt (31) und einen Anzeigeabschnitt (14) umfasst, der einen Motordrehzahl-Anzeigeabschnitt (18) zum Anzeigen einer Drehzahl des Verbrennungsmotors an dem Außenbordmotor (13) sowie einen Multi-Anzeigeabschnitt (20) zum Anzeigen verschiedener Arten von Status-Datenwerten bezüglich des Zustandes des Außenbordmotors (13) enthält,
der Multi-Anzeigeabschnitt (20) eine Punktmatrixanzeige (21) aufweist, in der Punkte, die frei an- und abgeschaltet werden können, in Form einer Matrix angeordnet sind, und die Status-Datenwerte mittels eines Leuchtmusters der Punkte angegeben werden, und
der Multi-Anzeigeabschnitt (20) einen Informationszeichen-Anzeigeabschnitt (42) aufweist, mit dem Informationszeichen gezeigt werden, um die Bedeutung und den Inhalt des auf der Punktmatrixanzeige (21) angezeigten Status-Datenwertes anzugeben, wobei
die Anzeigeposition der in dem Informationszeichen-Anzeigeabschnitt (42) angegebenen Informationszeichen und die Anzeigeposition der dem Informationszeichen entsprechenden Status-Datenwerte, die in der Punktmatrixanzeige (21) angegeben werden, so angeordnet sind, dass sie aufeinander ausgerichtet sind,
die Punktmatrixanzeige (21) in mehrere rechteckige Bereiche unterteilt ist, die vertikal in Abschnitten angeordnet sind, und jeder der rechteckigen Bereiche unterschiedliche Typen der Status-Datenwerte anzeigt, und
wobei der Punktmatrixanzeige-Verarbeitungsabschnitt (31) so eingerichtet ist, dass er die Anzahl der rechteckigen Abschnitte variabel festlegt, die ausgebildet werden, indem die Punktmatrixanzeige (21) mit dem rechteckigen Bereich unterteilt wird, und er die Höhe des rechteckigen Abschnitts (48), in dem der relevante Datenwert angezeigt wird, auf Basis der Gesamtzahl anzuzeigender Status-Datenwerte bestimmt.

2. Anzeigevorrichtung für ein Wasserfahrzeug nach Anspruch 1, wobei eine Anzeigeform der in jedem der rechteckigen Bereiche angegebenen verschiedenen Status-Datenwerte variabel festgelegt werden kann.

3. Anzeigevorrichtung für ein Wasserfahrzeug nach Anspruch 1 oder 2, wobei die Anzeigeform wenigstens teilweise eine Skalenanzeige ist, die durch das Leuchtmuster der Punkte dargestellt wird.

4. Anzeigevorrichtung für ein Wasserfahrzeug nach einem der Ansprüche 1 bis 3, wobei die Anzeigeform wenigstens teilweise eine Anzeige ist, die Zahlen oder Buchstaben verwendet, die durch das Leuchtmuster der Punkte dargestellt werden.

5. Anzeigevorrichtung für ein Wasserfahrzeug nach einem der Ansprüche 1 bis 4, wobei der Informationszeichen-Anzeigeabschnitt (42) an der Seite der Punktmatrixanzeige vorhanden ist.

6. Anzeigevorrichtung für ein Wasserfahrzeug nach einem der Ansprüche 1 bis 5, wobei Anzeigepositionen der in dem Informationszeichen-Anzeigeabschnitt (42) angegebenen Informationszeichen und Anzeigepositionen der den Informationszeichen entsprechenden Status-Datenwerte, die in dem Punktmatrixanzeige-Abschnitt (21) angegeben werden, nebeneinander ausgerichtet sind.

7. Anzeigevorrichtung für ein Wasserfahrzeug nach einem der Ansprüche 1 bis 6, wobei der Informationszeichen-Anzeigeabschnitt (429 in Gitter unterteilt ist, die in Form einer Matrix angeordnet sind, und ein vorgegebenes Informationszeichen in jedem der Gitter frei erleuchtet oder abgedunkelt wird, so dass variables Einstellen zum Aufleuchten oder Abdunkeln der Informationszeichen für jedes Gitter ermöglicht wird.

8. Anzeigevorrichtung für ein Wasserfahrzeug nach Anspruch 7, wobei das Informationszeichen, das in jedem der Gitter leuchten kann, ein graphisches Zeichen zum Identifizieren von Typen der Status-Daten ist, die in jedem der rechteckigen Bereiche der Punktmatrixanzeige angezeigt werden.

9. Anzeigevorrichtung für ein Wasserfahrzeug nach einem der Ansprüche 1 bis 8, wobei die verschiedenen Status-Datenwerte bezüglich der Zustände eines Außenbordmotors (13) eine Kühlwassertemperatur, eine Batteriespannung und einen Ölstand einschließen.

## Revendications

1. Dispositif d'affichage adapté pour un bateau ayant un moteur hors-bord (13), pour indiquer des valeurs de données d'état concernant les conditions du moteur hors-bord (13),
le dispositif d'affichage comprend une section de traitement à affichage à matrice par points (81) et une section d'affichage (14) contenant une section d'affichage de vitesse de moteur (18) pour afficher la vitesse de rotation du moteur hors-bord (13) et une section d'affichage multiple (20) pour afficher différentes sortes de valeurs de données d'état portant sur la condition du moteur hors-bord (13),
la section d'affichage multiple (20) a un affichage à matrice par points (21) dans lequel des points aptes à être allumés et éteints librement sont disposés en forme de matrice, et les valeurs de données d'état sont indiquées à l'aide d'un modèle d'éclairage des points, et
la section d'affichage multiple (20) a une section d'affichage d'indicateurs d'informations (42) pour visualiser des indicateurs d'informations destinés à indiquer la signification et le contenu de la valeur de données d'état affichée dans l'affichage à matrice par points (21), étant précisé que
la position d'affichage des indicateurs d'informations indiquée dans la section d'affichage d'indicateurs d'informations (42) et la position d'affichage des valeurs de données d'état correspondant à l'indicateur d'informations et indiquée dans l'affichage à matrice par points (21) sont disposées de manière à être dans l'alignement l'une de l'autre,
l'affichage à matrice par points (21) est divisé en plusieurs zones rectangulaires disposées verticalement en sections, et chacune des zones rectangulaires affiche différents types de valeurs de données d'état, et
étant précisé que la section de traitement à affichage à matrice par points (81) est apte à régler de manière variable le nombre de sections rectangulaires formées en divisant l'affichage à matrice par points (21) avec la zone rectangulaire, et à déterminer la hauteur de la section rectangulaire (48), dans laquelle la valeur de données significative est affichée, sur la base du nombre total de valeurs de données d'état à afficher.

2. Dispositif d'affichage pour un bateau selon la revendication 1, dans lequel une forme d'affichage des différentes valeurs de données d'état indiquées dans chacune des zones rectangulaires est apte à être réglée de manière variable.

3. Dispositif d'affichage pour un bateau selon la revendication 1 ou 2, dans lequel la forme d'affichage est constituée au moins en partie par un affichage de graduation représenté par le modèle d'éclairage des points.

4. Dispositif d'affichage pour un bateau selon l'une des revendications 1 à 3, dans lequel la forme d'affichage est constituée au moins en partie par un affichage qui utilise des chiffres ou des caractères représentés par le modèle d'éclairage des points.

5. Dispositif d'affichage pour un bateau selon l'une des revendications 1 à 4, dans lequel la section d'affichage d'indicateurs d'informations (42) est prévue sur le côté de l'affichage à matrice par points.

6. Dispositif d'affichage pour un bateau selon l'une des revendications 1 à 5, dans lequel les positions d'affichage des indicateurs d'informations indiquées dans la section d'affichage d'indicateurs d'informations (42) et les positions d'affichage des valeurs de données d'état correspondant aux indicateurs d'informations et indiquées dans la section d'affichage à matrice par points (21) sont dans l'alignement l'une de l'autre, côté à côte.

7. Dispositif d'affichage pour un bateau selon l'une des revendications 1 à 6, dans lequel la section d'affichage d'indicateurs d'informations (42) est divisée en grilles disposées en forme de matrice, et un indicateur d'informations prédéterminé est allumé ou éteint librement dans chacune des grilles, permettant un réglage variable pour allumer ou éteindre les indicateurs d'informations pour chacune des grilles.

8. Dispositif d'affichage pour un bateau selon la revendication 7, dans lequel l'indicateur d'informations apte à être éclairé dans chacune des grilles est constitué par un graphique pour identifier des types de données d'état affichés dans chacune des zones rectangulaires de l'affichage à matrice par points.

9. Dispositif d'affichage pour un bateau selon l'une des revendications 1 à 8, dans lequel les différentes valeurs de données d'état concernant les conditions d'un moteur hors-bord (13) contiennent une température d'eau de refroidissement, une tension de batterie et un niveau d'huile.
